# FASCICULE DE BREVET EUROPEEN

(11) **EP 1 123 468 B1**
(45) Date de publication et mention de la délivrance du brevet: **28.01.2004**
(21) Numéro de dépôt: 99950812.0
(22) Date de dépôt: 22.10.1999
(51) Int. Cl.: F16F 7/12, B60R 19/40, B61D 15/06, E01F 15/00, B61L 29/02, B66B 5/28, B66C 15/04, B62D 21/15

(54) **DISPOSITIF AMORTISSEUR DE CHOCS**
STOSSDÄMPFENDE VORRICHTUNG
SHOCK ABSORBING DEVICE

(30) Priorité: 23.10.1998 FR 9813295
(43) Date de publication de la demande: 16.08.2001
(73) Titulaire: Dytesys, 27200 Vernon (FR)
(72) Inventeur: AMEUR, Gabsi, F-27200 Vernon (FR)
(86) Numéro de dépôt international: PCT/FR1999/002575
(87) Numéro de publication internationale: WO 2000/025037

(56) Documents cités:
- EP-A- 0 724 999
- EP-A- 0 816 178
- DE-A- 2 150 446
- FR-A- 2 744 737
- GB-A- 2 020 234
- US-A- 3 823 968
- US-A- 5 042 858
- US-A- 5 071 188

## Description

La présente invention concerne un dispositif amortisseur de chocs entre un engin mobile, tel qu'un véhicule automobile, un ascenseur, un train, un bateau, un chariot, un pont roulant ou similaire et un obstacle, tel qu'une barrière, un butoir ou autre, ou entre deux engins mobiles, conformément au préambule de la revendication 1.

De nombreux systèmes d'amortissement de chocs et d'atténuation des effets de collision par l'absorption d'énergie ont été développés dans les domaines du transport ferroviaire, de l'automobile, du maritime, de l'aéronautique et de manière générale pour toute application industrielle où une structure peut être soumise à un risque de choc.

Les dispositifs d'absorption de chocs développés à ce jour peuvent être classés en deux familles.

Une première famille regroupe l'ensemble des dispositifs d'absorption de chocs incorporant une structure déployable. Ces dispositifs se caractérisent de manière générale par un faible niveau d'absorption d'énergie et une vitesse de déploiement faible les rendant inapplicables à certaines applications. Cette structure déployable peut être constituée par un sac gonflable comme le décrit le brevet EP-A-0.816.178. Dans ce cas, toutefois, le niveau d'absorption d'énergie est faible. Cette structure déployable peut encore être constituée, lorsqu'elle est appliquée à un véhicule automobile, d'une structure interposée entre le pare-chocs et le châssis du véhicule comme le décrit la demande internationale WO-A-92.18355. De tels systèmes se caractérisent dans ce cas par leur complexité. Par ailleurs, ils n'augmentent que très peu la quantité d'énergie absorbée et cela sur une course très faible pour un poids très élevé. Enfin, une autre structure déployable, appliquée à la réalisation de barrières de sécurité, notamment dans le domaine ferroviaire, est encore décrite dans le document EP-A-0.724.999. Dans ce document, du fait de la conception de la structure, son déploiement est lent et des phénomènes de rebonds peuvent se produire en cas de collision, ces rebonds pouvant avoir des conséquences dramatiques. En effet, cette structure se déploie et s'écrase par un mouvement en ciseaux de poutres rigides. L'énergie est stockée au niveau des liaisons par des ressorts de torsion. Cette approche ne permet pas de concevoir une structure à déploiement rapide (supérieure à 1 m/s) même en utilisant d'autres moyens de propulsion et en allégeant au maximum la structure. Par ailleurs, cette approche ne permet pas de concevoir un moyen d'absorption d'énergie de collision à des vitesses élevées, car elle met en mouvement de rotation des pièces rigides (avant le stockage de l'énergie, pour des niveaux de vitesses élevés: 10 m/s, la résistance de la structure devient fortement sensible à la vitesse).

Il est connu par ailleurs, par le brevet US A 5 042 858, un dispositif d'amortissement des chocs constitué d'une structure déployable dont l'objectif est de prendre en position déployée une orientation angulaire autorisant une déviation du véhicule qui va entrer en collision avec la structure de manière à éviter un choc frontal du véhicule avec la structure portée par une autre véhicule. La structure n'a pas pour fonction de se déformer au cours du choc mais au contraire de se maintenir dans une orientation prédéterminée autorisant une déviation latérale du véhicule destiné à entrer en collision avec cette structure. La structure doit donc être le plus indéformable possible pour maintenir cette orientation déterminée.

On connaît également à travers le document allemand DE 2 150 446 un dispositif amortisseur de choc constitué d'une structure et d'actionneurs se présentant généralement sous forme de vérins. Au cours d'un choc, la tige de ces actionneurs est rentrée à l'intérieur du corps d'actionneur, probablement à l'encontre d'éléments caoutchouc, pour assurer la fonction d'absorption de choc. De manière caractéristique à ce dispositif, la ligne d'action de ces actionneurs amortisseurs s'étend sensiblement dans la direction transversale au véhicule et non parallèlement à la direction longitudinale du véhicule, comme cela est généralement le cas dans les dispositifs d'amortisseurs classiques.

La seconde famille de dispositifs d'absorption de chocs est constituée par des dispositifs à structure d'absorption d'énergie fixe ou stationnaire. Tel est le cas du dispositif d'amortissement de chocs décrit dans le brevet FR-A-2.712.950. Il en est de même pour la structure décrite dans le brevet FR-A-2.747.633. Ces dispositifs se caractérisent de manière générale par leur encombrement particulièrement important. Par contre, ces dispositifs, du fait de la disposition de leurs éléments absorbants, présentent une course d'écrasement de la structure intéressante mais encore insuffisante pour ne pas engendrer une décélération dommageable lors d'un choc à des vitesses élevées. Par ailleurs, ces éléments absorbants interviennent dans la conception du châssis et de l'ossature de véhicules particuliers et ne permettent donc pas d'améliorer la résistance aux collisions des véhicules existants. De ce fait, à chaque conception nouvelle, une étude particulière et des essais de validation coûteux pour des capacités d'absorption limitées s'avèrent nécessaires.

Le but de la présente invention est donc de proposer un dispositif amortisseur de chocs dont la conception de la structure permet l'obtention d'un rapport Longueur d'écrasement de la structure/Longueur initiale de la structure élevé de sorte que cette structure, malgré un encombrement faible, présente une longueur d'écrasement importante autorisant une course de décélération non critique.

Un autre but de la présente invention est de proposer un dispositif amortisseur de chocs dont la structure d'absorption d'énergie présente un haut niveau d'absorption d'énergie, est rapidement déployable et peut être aisément modifiée en fonction des conditions de choc.

Un autre but de la présente invention est de proposer un dispositif amortisseur de chocs dont l'effort de résistance de la structure au cours de son écrasement est maîtrisé de sorte que la structure est capable de remplir sa fonction d'absorption à des niveaux de décélération précis et ce dans des gammes de vitesse d'écrasement très larges.

A cet effet, l'invention, a pour objet un dispositif amortisseur de chocs conformément à la revendication 1.

Grâce à la conception de la structure d'absorption d'énergie, la course d'allongement de la structure ainsi que la course d'écrasement de cette structure sont importantes malgré un encombrement réduit en position initiale de la structure avant un choc de sorte que toute décélération critique d'un engin mobile est évitée.

Selon une forme de réalisation préférée de l'invention, les éléments rigides de guidage affectent la forme de corps allongés, tels que des poutres, s'étendant dans un plan sensiblement perpendiculaire à la direction du choc.

Grâce à la présence de ces éléments rigides de guidage, le déploiement est réalisé de manière parfaite et sûre et toute dislocation de la structure au moment du choc est évitée, même à des grandes vitesses de collisions et à des niveaux d'énergie très élevés.

L'invention sera bien comprise à la lecture de la description suivante d'exemples de réalisation, en référence aux dessins annexés dans lesquels :
la figure 1 représente une vue schématique en coupe d'un dispositif amortisseur de chocs en position repliée de la structure ;
la figure 2 représente une vue schématique en coupe d'un dispositif amortisseur de chocs conforme à l'invention en position semi-déployée de la structure;
la figure 3 représente une vue schématique en coupe d'un dispositif amortisseur de chocs conforme à l'invention en position déployée de la structure ;
la figure 4 représente une vue schématique en coupe d'un dispositif amortisseur de chocs en position écrasée de la structure, le choc s'étant produit ;
la figure 5 représente une vue schématique partiellement en perspective d'un dispositif amortisseur de chocs conforme à l'invention, la structure en position déployée étant une structure tridimensionnelle et
les figures 6A et 6B représentent respectivement une vue schématique de poutres compressibles en position déployée et en position écrasée.

Le dispositif amortisseur de chocs, objet de l'invention, est constitué d'une structure 3 d'absorption d'énergie. En fonction de l'application du dispositif amortisseur de chocs, cette structure d'absorption d'énergie 3 peut être disposée sur un engin mobile 1, tel qu'un véhicule automobile, un ascenseur, un train, un bateau ou autre ou sur un obstacle 2, tel qu'une barrière, un butoir ou autre. Les applications de ce système sont donc nombreuses. Elles concernent le domaine du transport ferroviaire, maritime, aéronautique et routier. D'autres applications peuvent être également envisagées dans l'industrie civile et militaire. Une telle structure peut donc équiper tout engin en mouvement susceptible d'entrer en collision avec un obstacle. Elle peut également équiper des obstacles fixes susceptibles d'être heurtés accidentellement par des engins en mouvement. Elle peut encore équiper une partie d'un engin mobile susceptible d'être heurtée par une autre partie du même engin au cours d'un choc. Ainsi, concernant le transport ferroviaire, ce dispositif peut équiper des locomotives, l'arrière des trains et les espaces entre wagons d'un même train. Il peut équiper également des obstacles, tels que les heurtoirs ou les fins de voies. Il en va de même pour le transport maritime où cette structure peut équiper des bateaux ou des quais.

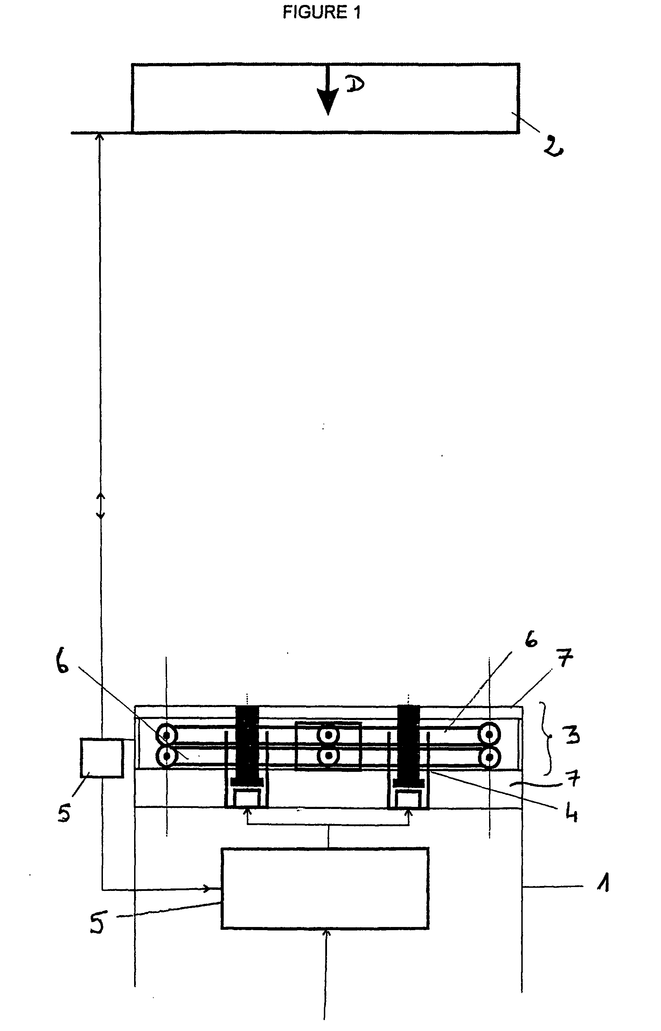

Cette structure d'absorption d'énergie 3 est déployable par l'intermédiaire d'actionneurs 4 commandés en fonctionnement, après détection d'un risque de choc et préalablement à ce choc, par des moyens de commande 5 appropriés. Les actionneurs 4 peuvent être divers et variés. Toutefois, dans un mode de réalisation préféré de l'invention, les actionneurs 4 sont des actionneurs linéaires, en particulier des vérins pyrotechniques dont le piston est de préférence désaccouplable du corps du vérin lors d'une extension de ce dernier. Une telle solution est représentée aux figures 1 à 3. Le dispositif peut également comporter, en fonction de la conception de la structure, plusieurs actionneurs 4, le déclenchement desdits actionneurs 4 pouvant ne pas être simultané.

Les moyens 5 de commande en fonctionnement de ces actionneurs 4 peuvent également affecter un grand nombre de formes. Ces moyens peuvent, dans leur version la plus simple, être composés d'un simple détecteur d'obstacle et d'un générateur de signal pour déclencher le système de mise en pression des vérins. Dans une version plus élaborée, en particulier quand la structure est montée sur un engin mobile, ces moyens peuvent être composés d'un détecteur d'obstacle, d'un système de mesure de la vitesse relative, d'un calculateur et d'un générateur de signal pour déclencher le système de mise en pression des vérins. L'acquisition des données mesurées ou transmises par l'environnement, les calculs et les analyses des opérations mathématiques et le générateur de signal de déclenchement du vérin pyrotechnique peuvent être concentrés dans une centrale électronique. Les paramètres servant à la décision peuvent inclure d'autres données provenant de l'environnement ou de mesures internes et externes.

Le fonctionnement des actionneurs 4 peut être commandé ou arrêté par l'extérieur, par exemple avec un interrupteur actionné manuellement. Même si le vérin pyrotechnique est préféré d'autres systèmes de propulsion, en particulier des vérins pneumatiques, peuvent équiper les dispositifs amortisseurs de chocs. Dans le cas d'un vérin pyrotechnique, le gaz moteur est produit par un générateur pyrotechnique. Dans le cas des vérins pneumatiques, le gaz est produit par la décharge d'un réservoir rempli de gaz sous pression. Le déclenchement de la poussée se manifeste par l'ouverture très rapide d'une électrovanne qui sépare le réservoir de stockage du gaz sous pression et le cylindre du vérin. Si le gaz moteur est produit par un générateur pyrotechnique, le déclenchement de la poussée se réalise par l'initiation du générateur pyrotechnique alimentant le vérin. La longueur de poussée du vérin n'est pas forcément égale à la longueur du déploiement. En effet, le vérin peut être utilisé seulement pour accélérer le mouvement de la structure vers l'avant sur une partie limitée de la course. Ensuite, la structure continue son mouvement de déploiement avec l'énergie cinétique acquise dans le stade d'accélération.

La structure d'absorption d'énergie déployable est quant à elle constituée au moins de poutres compressibles 6 qui, en position déployée de la structure 3, absorbent principalement par leur compression axiale irréversible l'énergie engendrée par un choc se produisant selon une direction D donnée. La direction D du choc est définie par calcul. Pour autoriser un tel déploiement de la structure, les poutres compressibles 6 sont liées entre elles et/ou à des éléments rigides de guidage 7 par des liaisons 8, 9, 11 autorisant respectivement un mouvement de translation, de rotation autour d'un axe fixe et de rotation autour d'un axe mobile desdites poutres au cours du déploiement de la structure. Ces liaisons simples autorisent un déploiement rapide sans coincement de la structure.

A l'issue du déploiement, les liaisons 8, 9 et 11 peuvent être verrouillées en position déployée de la structure. Les organes de verrouillage de ces liaisons n'ont pas été représentés aux figures. Toutefois, ces organes de verrouillage peuvent être constitués par des solutions classiques, telles que des goupilles positionnées au moyen de ressorts ou autres. La structure peut également être équipée de dispositifs constitués par des amortisseurs viscoélastiques ou élasto-plastiques. A titre d'exemple, ces moyens d'amortissement et de freinage peuvent être constitués par des bagues en matière plastique ou des tubes métalliques ou par usinage. En effet, le mouvement de déploiement de la structure 3 se fait en deux temps : accélération et décélération. L'accélération est assurée par la force appliquée par l'actionneur 4. Avant la fin de la course de déploiement, le mouvement doit être décéléré pour arrêter la structure dans sa position déployée sans l'endommager par un arrêt brutal de fin de course. Divers systèmes de freinage et d'amortissement des poutres en fin de course de la structure se déployant peuvent être employés pour remplir cette fonction. La nature de ces éléments dépend des masses en mouvement, des courses de décélération et des vitesses du mouvement de déploiement. On peut citer à titre d'exemple des amortisseurs viscoélastiques ou plastiques sous forme de tampon absorbant l'énergie au cours de leur écrasement. L'énergie absorbée par ces éléments d'arrêt est égale à l'énergie cinétique obtenue par la structure au cours de la phase d'accélération par l'actionneur 4. Pour éviter l'endommagement de la structure 3 par un arrêt brutal en fin de course, on utilise les moyens d'amortissement précités. Une fois déployée, la structure est maintenue rigidement par blocage d'au moins quelques une des liaisons.

Les éléments rigides de guidage 7 qui participent à l'architecture de la structure 3 affectent, quant à eux, de préférence la forme de corps allongés, tels que des poutres, s'étendant dans un plan sensiblement perpendiculaire à la direction D du choc. Dans la position repliée de la structure, ces éléments de guidage peuvent avoir d'autres fonctions mécaniques. Il est à noter que cette direction D du choc correspond généralement à l'axe principal de déploiement de la structure comme le montrent les figures. Cette direction D de choc a été déterminée par calcul et a permis de déterminer le positionnement de la structure 3 sur l'engin mobile ou l'obstacle à protéger. A l'inverse, les poutres compressibles 6 occupent, en position déployée de la structure 3, une position sensiblement parallèle à la direction D du choc ou forment un angle avec cette dernière, cet angle étant différent de 90 degrés. Une ou plusieurs poutres compressibles 6 et/ou un ou plusieurs éléments rigides de guidage 7 peuvent appartenir à un autre sous-ensemble mécanique ayant dans l'engin ou dans l'installation fixe ou mobile équipé(e), une fonction mécanique autre que celle de la structure déployable. Il est à noter que les actionneurs 4 peuvent se comporter comme les poutres compressibles 6 en se comprimant axialement de manière irréversible lors d'un choc ou remplir le rôle d'éléments rigides de guidage. En d'autres termes, l'actionneur 4 est un vérin dont le corps et/ou la tige peuvent constituer en outre un élément rigide de guidage 7 et/ou une poutre compressible 6.

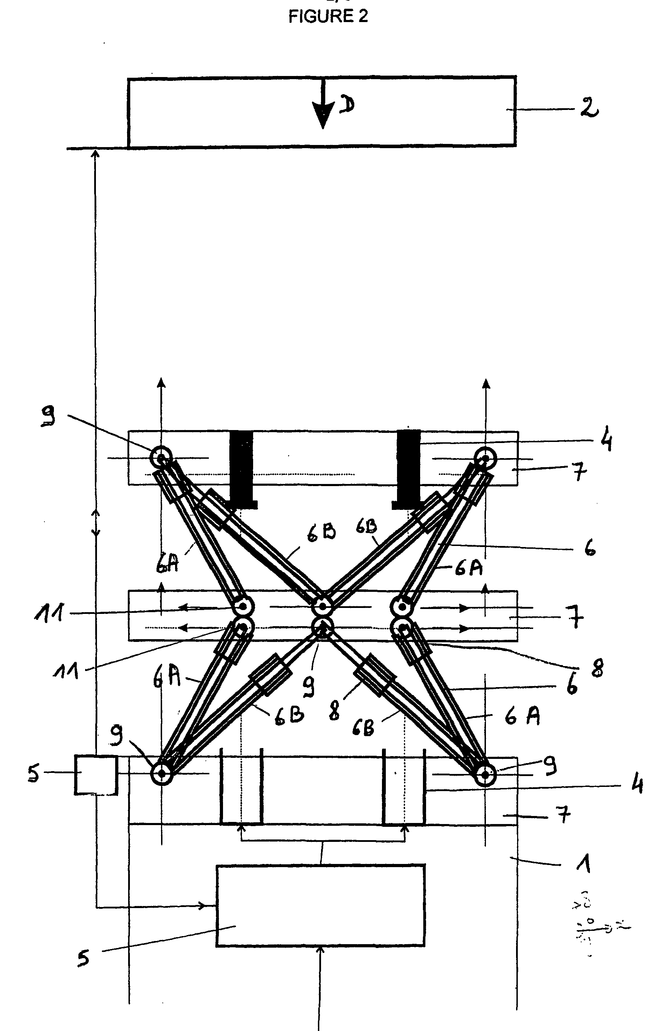

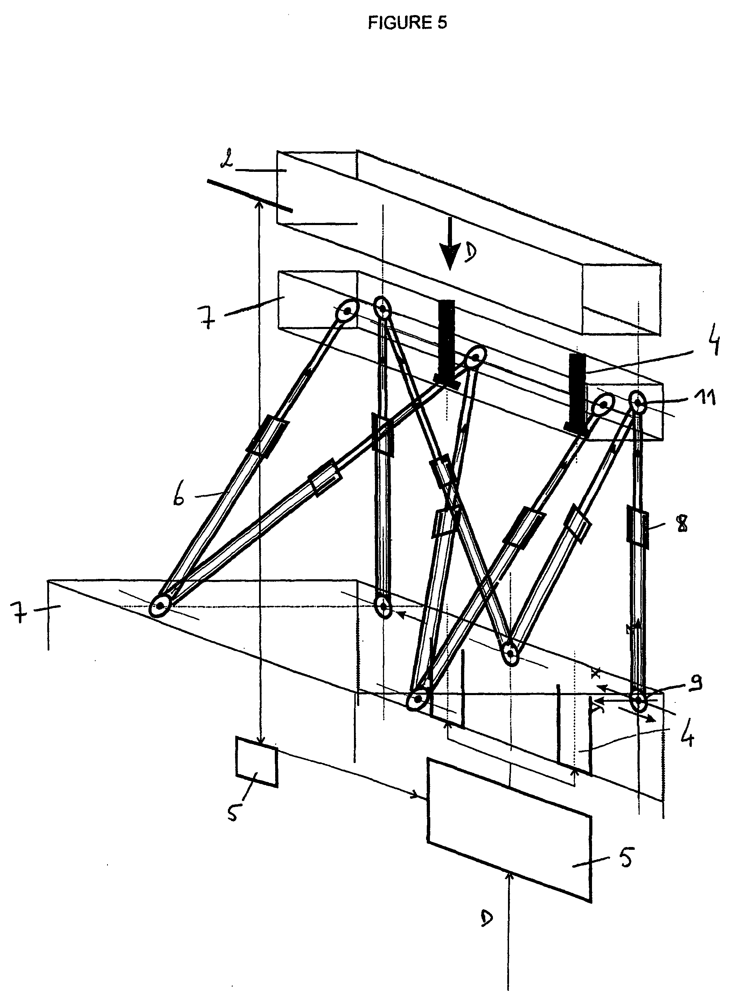

Pour assurer un déploiement rapide de la structure, lés liaisons 8, 9, 11 entre poutres 6 ou entre poutre 6 et élément de guidage 7 sont des liaisons simples. Ainsi, les liaisons 8 autorisant une translation des poutres 6 sont conformées pour autoriser au moins une translation de la poutre 6 parallèlement à son axe longitudinal. Les liaisons 9 ou respectivement 11 autorisant une rotation des poutres 6 entre elles ou avec les éléments rigides 7 sont quant à elles conformées pour autoriser au moins une rotation desdites poutres 6 autour d'un axe fixe ou respectivement mobile perpendiculaire à l'axe longitudinal de la poutre 6. Dans le cas des liaisons 11 représentées à la figure 2, l'axe mobile de la liaison se déplace parallèlement à lui-même en coulissant le long d'un élément rigide de guidage 7 intermédiaire. La liaison 11 autorise donc à la fois une rotation et une translation de la poutre 6 parallèlement à l'axe longitudinal de l'élément auquel elle est reliée. Sur la base de ce principe, les structures ainsi élaborées peuvent être diverses et variées. Des exemples en ont été fournis aux figures 1 et 5.

La forme définitive de la structure est fonction de la résistance devant être offerte par la structure aux efforts latéraux et/ou transversaux et/ou axiaux. Il est donc ainsi possible, avec une telle conception de la structure, de réaliser une structure affectant une forme tridimensionnelle lui permettant de résister aux efforts précités sans que ces efforts globaux appliqués à la structure n'engendrent des moments de flexion ou des efforts tranchants au niveau des poutres 6, car celles-ci doivent être sollicitées principalement en compression simple. Tel est le cas de la structure représentée à la figure 5.

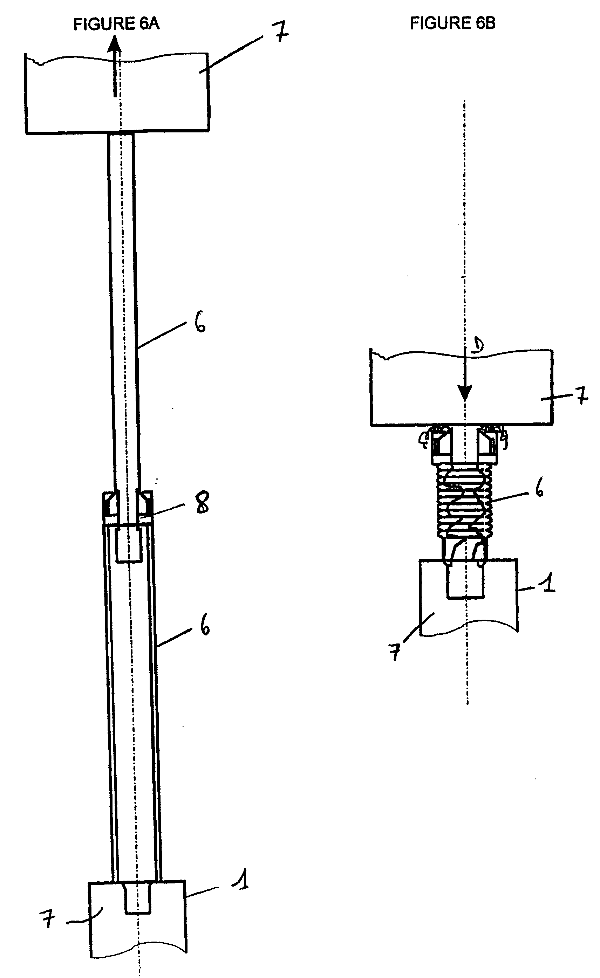

Pour augmenter encore les longueurs de déploiement et d'écrasement de la structure 3 à partir d'une dimension réduite de la structure à l'état replié, au moins certaines des poutres 6 compressibles sont montées à emboîtement télescopique. La liaison 8 entre les poutres emboîtées permet un mouvement de translation rectiligne suivant l'axe longitudinal de ces poutres. Dans la position déployée, la liaison est bloquée par un organe de blocage, empêchant ainsi le remboîtement libre. Les caractéristiques structurelles de ces poutres emboîtables sont choisies de telle sorte que, lors d'un choc, les poutres 6 se compriment en pénétrant l'une dans l'autre ou, en d'autres termes, en se remboîtant. Les structures de ces poutres 6 compressibles peuvent être diverses et variées en fonction de l'énergie à absorber. A titre d'exemple, au moins l'une des poutres 6 de la structure 3 est, pour sa compression axiale, pourvue de vides. Dans un autre mode de réalisation conforme à la figure 6A, au moins l'une des poutres 6 est une poutre dite compressible par usinage, cette poutre coopérant avec des outils d'usinage, poutre 6 et outils étant animés d'un mouvement relatif sous l'action d'une force de compression pour engendrer l'usinage longitudinal de la poutre par des outils. Dans ce cas, l'absorption d'énergie se fait par la découpe du métal par l'outil. La force transmise par la poutre est égale à la résultante axiale des efforts de coupe appliqués par l'outil. Dans le but de réduire l'espace occupé par ces poutres après l'écrasement, il est proposé de concevoir des sections permettant aux poutres de résister aux efforts de compression dans leur état vierge. Ensuite, l'entaille créée par l'usinage doit réduire fortement leur moment d'inertie suivant Ix ou Iy. Par conséquent, ces poutres peuvent être écrasées par la suite en flambement sous l'action d'une force faible. En cas de montage télescopique, la conception de la poutre doit lui permettre d'être fortement fragilisée en compression après son usinage, ce qui facilite son écrasement sous un effort faible en seconde étape comme le montre la figure 6B. L'une des poutres 6 de la structure 3 peut encore être une poutre de section de préférence carrée qui, sous l'action d'une force de compression, se déchire simultanément aux angles de ladite poutre dans le sens de la longueur, les quatre côtés ainsi séparés se pliant vers l'extérieur en décrivant chacun un cercle tangent à la surface extérieure de la poutre. On peut également imaginer des poutres en composite. Ces poutres sont des tubes. Sous l'action de l'effort de compression, au moins l'une des poutres 6 de la structure 3 est une poutre, de préférence en un matériau composite, qui, sous l'action d'une force de compression, se comprime par rupture, endommagement et déchirure de ses parois. L'endommagement et la rupture du matériau en petits éléments permettent de réduire le volume occupé par le matériau.
Journ. of Composite materials, Vol. 16, (Nov.1982), P. 521. Journ. of Composite materials, Vol. 17, (Mai 1983), P. 267. Journ. of Composite materials, Vol. 20, (Juil.1986), P. 322.
Il est encore possible d'utiliser dans la structure au moins une poutre déformable par flambage localisé, ce flambage se propageant sous forme de plis successifs.
Journ. Mech. and Apll., Math, Vol. XIII, Pt. 1, 1960, Int. J. Mech; Sci., Vol. 28, N° 5, pp. 295-322, 1986).
Un exemple de réalisation d'une telle poutre est également représenté à la figure 6A. Par ailleurs, les poutres peuvent se déformer successivement ou simultanément. Ainsi, dans l'exemple représenté aux figures 6A et 6B, sous l'action d'une force de compression, la poutre intérieure du montage à emboîtement revient à l'intérieur de l'autre poutre en s'usinant par l'outil. Cet usinage fragilise la poutre. Ensuite, après l'usinage de la poutre intérieure, la poutre extérieure s'écrase. La poutre intérieure fragilisée par l'usinage s'écroule à l'intérieur de la poutre extérieure sans empêcher l'écrasement de cette poutre extérieure. La poutre intérieure se déforme donc par usinage à grande vitesse tandis que la poutre extérieure se déforme par flambage localisé. Il en résulte une course d'écrasement des poutres particulièrement importante qui permet d'éviter des décélérations critiques. Dans un autre mode de réalisation, on peut imaginer que la poutre intérieure s'écrase par flambage localisé et que la poutre extérieure soit un tube en matériau composite qui s'écrase en se déchirant vers l'extérieur. Dans sa position déployée, la poutre intérieure est bloquée en position sortie par un organe de blocage. Après l'écrasement de la première poutre intérieure par flambage, l'organe de blocage est désactivé ou rompu et l'écrasement de la poutre en composite vers l'extérieur se fait par enfoncement de la poutre intérieure précédemment écrasée. Il en résulte une course d'écrasement de cet assemblage de poutres particulièrement importante qui peut être supérieure à la longueur initiale de l'assemblage dans son état emboîté. Bien évidemment, d'autres combinaisons, au regard de l'ensemble des structures de poutres décrites ci-dessus ou d'autres types de poutres compressibles, peuvent être envisagées.

Comme le montrent les figures 1 à 5, la structure d'absorption d'énergie 3 comporte au moins un étage 10. Cet étage 10 est constitué d'au moins deux éléments rigides de guidage 7 reliés entre eux par des poutres 6 compressibles. Au moins l'un des éléments rigides de guidage 7 se déplace sensiblement parallèlement à lui-même au cours du déploiement de la structure 3. Dans certaines configurations, au moins l'un des éléments rigides de guidage 7 du premier étage 10 pourra être un élément constitutif de l'engin mobile 1 ou de l'obstacle 2 à protéger d'un choc.

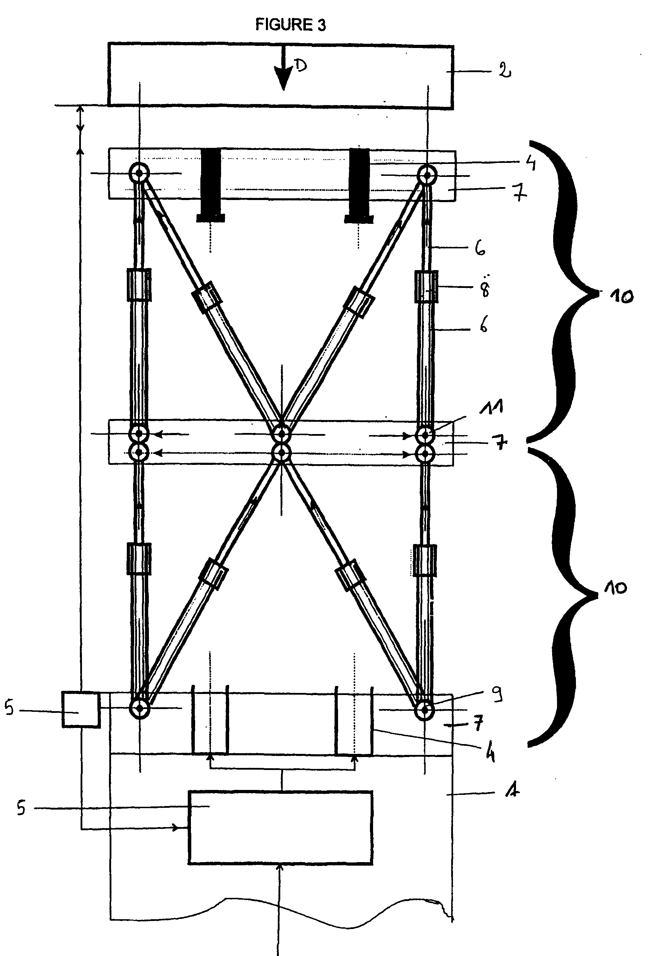

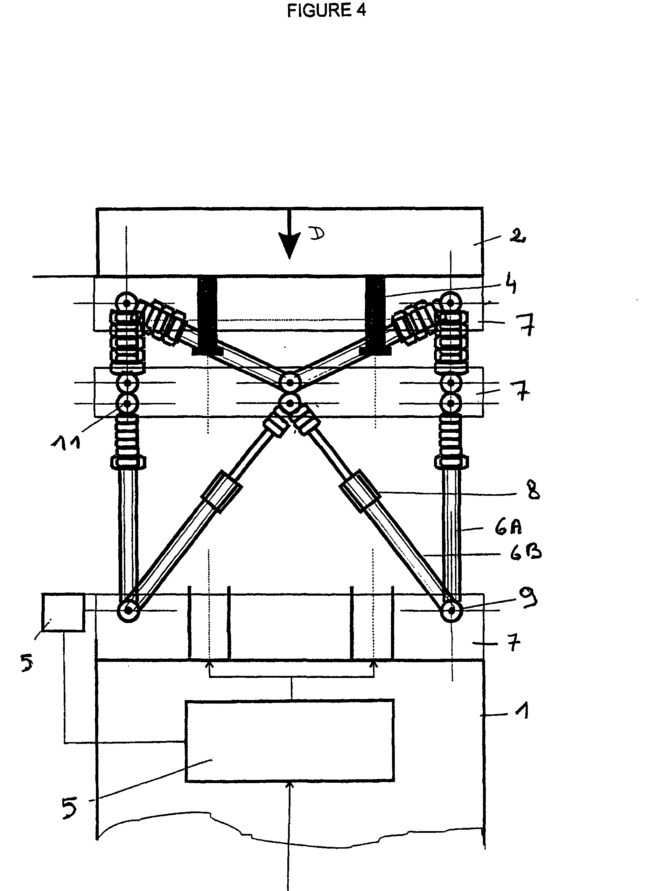

La structure 3 représentée aux figures 1 à 4 comporte deux étages 10. Comme le montre la figure 1, cette structure 3 présente, en position repliée, un faible encombrement. Dans l'exemple représenté à la figure 2, la structure 3, partiellement déployée, est constituée de deux groupes de poutres 6A, 6B s'étendant dans deux plans parallèles (X, Z) par référence au repère orthonormé (x, y, z) représenté à la figure 2. Bien que les poutres soient désignées par la référence générale 6, elles sont ici désignées par les références 6A et 6B pour faciliter la lecture des figures 2 et 3. Les poutres 6A sont constituées d'une seule poutre ou de deux poutres télescopiques reliées entre elles par une liaison 8. Chaque poutre 6A ou l'ensemble formé par deux poutres 6A télescopiques est relié à l'une de ses extrémités sur un élément de guidage 7 au moyen d'une liaison 9 autorisant un mouvement de déplacement en rotation de la poutre 6A ou de l'ensemble de poutres autour d'un axe Y fixe par rapport à l'élément de guidage et à son autre extrémité sur un élément de guidage 7 dit intermédiaire par une liaison 11 autorisant un mouvement de rotation autour de l'axe Y, cet axe étant mobile et coulissant perpendiculairement à Y dans l'élément de guidage intermédiaire 7. Cet élément de guidage 7 est dit intermédiaire car il sert à la séparation de deux étages 10. Ces poutres 6A occupent, en position finale de déploiement de la structure 3, une position sensiblement parallèle à la direction D du choc. Une autre série de poutres est constituée par les poutres 6B. Ces poutres 6B sont constituées d'une poutre unique ou d'un assemblage d'au moins deux poutres télescopiques reliées par une liaison 8. Chaque poutre 6B ou l'ensemble formé par deux poutres télescopiques 6B est relié, à l'une de ses extrémités, par une liaison rotative 9 à un élément de guidage 7 et, à son autre extrémité, par une liaison 9 également rotative à l'élément de guidage intermédiaire 7. Ces poutres 6B forment par paire, à chaque étage 10, sensiblement un V dont la pointe est disposée sur l'élément de guidage 7 intermédiaire. Ces poutres 6B autorisent une résistance de la structure 3 aux efforts latéraux. Les poutres 6B sont positionnées dans un plan (X, Z) parallèle au plan contenant les poutres 6A de telle sorte que l'ensemble des poutres 6A et 6B peuvent se déployer simultanément. Chaque poutre 6A, mentionnée ci-dessus, est, dans la figure 2, une poutre logeant à emboîtement une autre poutre 6A de manière à augmenter la longueur de déploiement de la structure 3. Chaque poutre 6B, mentionnée ci-dessus, est, dans la figure 2, une poutre logeant à emboîtement une autre poutre 6B de manière à augmenter sa longueur et permettre son déploiement en diagonale. Cette augmentation de longueur est une obligation géométrique. Entre deux éléments de guidage 7, les poutres 6A et 6B forment, à l'état déployé, sensiblement un W à l'endroit ou à l'envers. Au cours du choc, l'ensemble des poutres 6A, 6B tendent à se comprimer pour occuper une position conforme à celle représentée à la figure 4. Cet écrasement peut encore être poursuivi jusqu'à écrasement total desdites poutres.

Basé sur ce même principe de déploiement des poutres, la structure peut être compliquée à l'envie comme le montre la figure 5. Il est à noter que les éléments rigides 7 de guidage et de support du reste de la structure peuvent affecter un grand nombre de formes. Ces éléments 7, se présentant généralement sous forme de corps allongés, peuvent être rectilignes ou courbes. L'élément de guidage 7, le plus en avant de la structure 3, en position déployée de cette dernière, peut également servir de carter à l'engin mobile 2 ou à l'obstacle 1 à protéger en position repliée de la structure 3.

En ce qui concerne la conception de la structure, on peut donc disposer de structure à déploiement dit 1D. Dans ce cas, le déploiement de la structure absorbeuse d'énergie est réalisé par un mouvement rectiligne de ces poutres suivant l'axe Z. Seuls des mouvements de translation rectilignes suivant un axe sont autorisés au cours du déploiement. Les liaisons poutres et les liaisons poutres-éléments de liaison 7 sont représentées en 8. Les poutres ne sont pas alors forcément toutes parallèles à l'axe Z. Seul leur mouvement de translation est parallèle à l'axe Z. Dans une structure à déploiement 2D, le déploiement se fait dans ce deuxième cas par des translations dans le plan (X, Z) suivant les axes longitudinaux des poutres 6 et par des rotations de ces poutres 6 autour d'un axe Y fixe ou mobile mais toujours perpendiculaire à leur axe longitudinal. L'exemple des figures 1 à 4 est une structure 2D. Le premier intérêt de ce mode de déploiement est qu'il permet de déployer, sur une grande longueur suivant une direction, une structure rangée suivant une autre direction et ayant par voie de conséquence un encombrement très faible suivant la première direction dans son état initial (de rangement). Le deuxième intérêt de ce mode de déploiement est qu'il permet de déployer en diagonale du plan (X, Z) les poutres et de construire par voie de conséquence un treillis. En cas de choc de biais, une composante latérale suivant l'axe X peut engendrer un effondrement en flexion généralisé de la structure par rapport à l'axe Y. La forme de ce type de structure triangulaire augmente fortement la résistance de la structure au cisaillement et aux moments de flexion engendrés par ces efforts latéraux.

Dans une structure à déploiement dit 3D, la structure 3 tridimensionnelle se déploie par des mouvements de translation et de rotation suivant les trois axes X, Y et Z. Des formes triangulaires dans les plans (X O Z) et (X O Y) permettent de concevoir une structure résistant aux efforts latéraux et transversaux. Des rotations autour de l'axe X peuvent transformer les formes latérales de la structure en trapèze. Des rotations de poutres autour d'Y permettent de transformer les faces supérieure et inférieure de la structure 3 également en trapèze. Il est bien évident que la forme extérieure de la structure déployée n'est pas toujours rectangulaire. Par ailleurs, plusieurs groupes de poutres peuvent être superposés parallèlement dans des plans (X, Z).

En conséquence, une telle structure, malgré des éléments constitutifs de base extrêmement simples, peut affecter un grand nombre de formes et offrir une résistance accrue aux chocs. L'intérêt principal de ces structures en treillis est de concevoir des structures longues, résistant aux efforts latéraux et transversaux et garantissant une très bonne stabilité au cours de leur écrasement, tout en étant constituées par des poutres 6 légères ayant des moments d'inertie très faibles et ne travaillant qu'en compression suivant leurs axes longitudinaux.

Par ailleurs, le principe de fonctionnement d'un tel dispositif est extrêmement simple et peut se résumer par les quatre étapes principales suivantes :
1. détection de l'obstacle, analyse des mouvements et génération du signal électrique du déclenchement ;
2. déploiement de la structure sous l'action des efforts de poussée des actionneurs initiés par le signal de déclenchement ;
3. arrêt du déploiement par la décélération et l'arrêt des poutres dans la position finale de déploiement et blocage de quelques une des liaisons, et
4. écrasement de la structure au cours de la collision.

Les applications d'un tel dispositif amortisseur de chocs sont nombreuses. Un tel dispositif pourra notamment équiper le wagon d'un train pour amortir la collision entre wagons dudit train. Il pourra encore équiper un élément fixe d'une structure pour empêcher le choc dudit élément avec un autre élément de cette même structure lors d'un choc subi par ladite structure.

## Revendications

1. Dispositif amortisseur de chocs, en particulier entre un engin mobile (1), tel qu'un véhicule automobile, un bateau, un chariot, un ascenseur, un train, un avion, un pont roulant ou autre et un obstacle (2), tel qu'une barrière,
un butoir ou autre, ou entre deux engins mobiles ou entre deux parties d'un même engin susceptibles de se heurter au cours d'un choc subi par l'engin, ce dispositif, agencé pour être monté en particulier sur l'obstacle (2) et/ou sur l'engin mobile (1), étant constitué d'une structure (3) d'absorption d'énergie déployable par l'intermédiaire d'actionneurs (4) commandés en fonctionnement, après détection d'un risque de choc et préalablement à ce choc, par des moyens de commande (5) appropriés, ladite
structure (3) d'absorption d'énergie déployable étant constituée au moins de poutres (6) compressibles liées entre elles et/ou à des éléments rigides de guidage (7) par des liaisons (8, 9, 11) autorisant un mouvement de rotation et/ou de translation desdites poutres (6) au cours du déploiement de la structure (3); **caractérisé en ce que** lesdites poutres (6) compressibles, en position déployée de la structure (3), absorbent principalement par leur compression axiale irréversible l'énergie engendrée par un choc se produisant selon une direction (D) donnée, et **en ce que** lesdites liaisons (8, 9, 11) peuvent être verrouillées en position déployée de la structure (3).

2. Dispositif selon la revendication 1,
**caractérisé en ce que** les éléments rigides de guidage (7) affectent la forme de corps allongés, tels que des poutres, s'étendant dans un plan sensiblement perpendiculaire à la direction (D) du choc.

3. Dispositif selon l'une des revendications 1 et 2,
**caractérisé en ce que** les liaisons (8) autorisant une translation des poutres (6) sont conformées pour autoriser au moins une translation de la poutre (6) parallèlement à son axe longitudinal.

4. Dispositif selon l'une des revendications 1 à 3,
**caractérisé en ce que** les liaisons (9, 11) autorisant une rotation des poutres (6) entre elles ou avec les éléments rigides (7) sont conformées pour autoriser au moins une rotation desdites poutres (6) autour d'un axe fixe ou respectivement mobile perpendiculaire à l'axe longitudinal de la poutre (6).

5. Dispositif selon l'une des revendications 1 à 4,
**caractérisé en ce qu'**au moins certaines des poutres (6) compressibles sont montées à emboîtement télescopique pour augmenter la longueur de déploiement de la structure (3) d'absorption d'énergie, les caractéristiques structurelles desdites poutres (6) emboîtables étant choisies de telle sorte que, lors d'un choc, lesdites poutres (6) se compriment en pénétrant l'une dans l'autre.

6. Dispositif selon l'une des revendications 1 à 5,
**caractérisé en ce que** la structure d'absorption d'énergie (3) affecte une forme tridimensionnelle lui permettant de résister aux efforts latéraux et/ou transversaux et/ou axiaux.

7. Dispositif selon l'une des revendications 1 à 6,
**caractérisé en ce que** les actionneurs (4) sont des vérins pyrotechniques dont le piston est de préférence désaccouplable du corps du vérin lors d'une extension de ce dernier.

8. Dispositif selon l'une des revendications 1 à 7,
**caractérisé en ce que** l'actionneur (4) est un vérin dont le corps et/ou la tige peuvent constituer en outre un élément rigide de guidage (7) et/ou une poutre compressible (6).

9. Dispositif selon l'une des revendications 1 à 8,
**caractérisé en ce qu'**il comporte plusieurs actionneurs (4), le déclenchement desdits actionneurs (4) n'étant pas simultané.

10. Dispositif selon l'une des revendications 1 à 9, **caractérisé en ce qu'**il comporte des moyens d'amortissement et de freinage des poutres en fin de course de la structure se déployant.

11. Dispositif selon l'une des revendications 1 à 10,
**caractérisé en ce qu'**au moins l'une des poutres (6) est une poutre dite compressible par usinage, cette poutre coopérant avec des outils d'usinage, poutre (6) et outils étant animés d'un mouvement relatif sous l'action d'une force de compression pour engendrer l'usinage longitudinal de la poutre par des outils.

12. Dispositif selon l'une des revendications 1 à 11,
**caractérisé en ce qu'**au moins l'une des poutres (6) de la structure (3) est une poutre, de préférence en un matériau composite, qui, sous l'action d'une force de compression, se comprime par rupture, endommagement et déchirure de ses parois.

13. Dispositif selon l'une des revendications 1 à 12,
**caractérisé en ce qu'**au moins l'une des poutres (6) de la structure est déformable par flambage localisé, ce flambage se propageant sous forme de plis successifs.

14. Dispositif selon l'une des revendications 1 à 13,
**caractérisé en ce que** lesdites poutres se déforment successivement ou simultanément.

15. Dispositif selon l'une des revendications 1 à 14,
**caractérisé en ce que** la structure d'absorption d'énergie (3) comporte au moins un étage (10), ledit étage étant constitué d'au moins deux éléments rigides de guidage (7) reliés entre eux par des poutres (6) compressibles, au moins l'un des éléments rigides de guidage (7) se déplaçant sensiblement parallèlement à lui-même au cours du déploiement de la structure (3).

## Patentansprüche

1. Ein Stossdämpfer, u. a. zwischen einem beweglichen Gerät (1), wie ein Kraftfahrzeug, einen Schiff, einen Wagen, einen Lift, einen Zug, einen Flugzeug, eine rollende Brücke, usw., und einem Hindernis (2), wie einen Schrank, einen Puffer, usw., oder zwischen zwei beweglichen Geräten oder zwei Teilen eines Gerätes, die empfänglich sind, sich zu stossen während eines vom Gerät erfahrenen Stosses. Diese Vorrichtung ist gebaut, um auf dem Hindernis (2) und/oder auf dem beweglichen Gerät (1), aufgerichtet zu werden. Diese Vorrichtung besteht aus einer ausbreitenden, energiedämpfenden, von Auslöser (4) gesteuerten Struktur (3); diese Auslöser sind nach der Abfragung eines Stossrisikos und vor dem Stoss durch passende Mittel (5) eingestellt. Die besagte energiedämpfende Struktur (3) besteht aus verdichtbaren Balken (6), die besagten Balken (6) sind miteinander oder mit starren Führungselementen (7) mit Verbindungen (8,9,11) die eine Übertragung und/oder Umdrehungsbewegung der besagten Balken (6) während der Ausbreitung der Struktur (3) erlauben, gebunden. Die besagte Struktur (3) ist also dadurch charakterisiert, dass die besagten verdichtbaren Balken (6) die Energie von einem Schock in einer besagten Richtung (D) durch ihre unwiederrufliche Achsenkompression absorbieren, wann die Struktur (3) ausgebreitet ist, und also dadurch, dass die besagten Verbindungen (8,9,11) können in der ausgebreitenen Position verriegelt werden.

2. Eine Vorrichtung wie im 1. Anspruch beschrieben, dadurch charakterisiert, dass die starre Führungselemente (7) in der Art eines langgezogenen Stoffs, wie z.B. Balken, sind, so dass die besagten Stoffen in einer Ebene ungefähr senkrecht von der Stossrichtung (D) sich verbreiten.

3. Eine Vorrichtung wie im 1. oder im 2. Anspruch beschrieben, dadurch charakterisiert, dass die Verbindungen (8), die eine Übergangsbewegung der Balken (6) erlauben, so ausgebaut sind, dass mindestens eine Übertragungsbewegung des Balkens (6) gleichgehend mit seiner Längsachse erlaubt ist.

4. Eine Vorrichtung wie in einem der 1. bis 3. Ansprüche beschrieben, dadurch charakterisiert, dass die Verbindungen (9,11), die eine Umdrehungsbewegung der Balken (6) erlauben, so ausgebaut sind, dass mindestens eine Umdrehungsbewegung der besagten Balken (6) um eine unbewegliche Achse oder bzw. eine bewegliche Achse senkrecht von der Längsachse des Balkens (6), erlaubt ist.

5. Eine Vorrichtung wie in einem der 1. bis 4. Ansprüche beschrieben, dadurch charakterisiert, dass mindestens einige der verdichtbaren Balken (6) in einanderschiebbarer Art gebaut sind, um die Ausbreitungslänge der Struktur (3) zu vergrössern; die strukturelle Daten der einanderschiebbaren energiedämpfenden Balken (6) sind so gewählt, dass diese Balken (6) während eines Stosses sich verdichten, die eine in die andere durchdringend.

6. Eine Vorrichtung wie in einem der 1. bis 5. Ansprüche beschrieben, dadurch charakterisiert, dass die energiedämpfende Struktur eine dreidimensionnelle Gestaltung nimmt, so dass sie die seitlichen, queren und/oder achsrechten Kräfte widerstehen kann.

7. Eine Vorrichtung wie in einem der 1. bis 6. Ansprüche beschrieben, dadurch charakterisiert, dass die Auslöser aus pyrotechnischer Winden bestehen, deren Kolben vorzugsweise während ihrer Ausbreitung vom Windenhauptteil lostrennbar sind.

8. Eine Vorrichtung wie in einem der 1. bis 7. Ansprüche beschrieben, dadurch charakterisiert, dass der Auslöser (4) aus einer pyrotechnischen Winde besteht, deren Hauptteil oder Spindel aus einem starren Führungselement und/oder ein verdichtbarer Balken bestehen kann.

9. Eine Vorrichtung wie in einem der 1. bis 8. Ansprüche beschrieben, dadurch charakterisiert, dass sie mehrere Auslöser enthaltet, und dass die Einstellung der verschiedenen Auslöser nicht gleichzeitig sein kann.

10. Eine Vorrichtung wie in einem der 1. bis 9. Ansprüche beschrieben, dadurch charakterisiert, dass sie für die Balken Dämpferungs- und Bremsmittel, die wenn die Struktur völlig ausbreitet ist benutzungsbereit sind, enthaltet.

11. Eine Vorrichtung wie in einem der 1. bis 10. Ansprüche beschrieben, dadurch charakterisiert, dass mindestens einer der Balken (6) der Struktur (3) aus einem Balken besteht, vorzugsweise in einem zusammengewürfelten Material umgefasst, der durch Bruch, Schäden oder Zerriss seiner Wände sich verdichten kann.

12. Eine Vorrichtung wie in einem der 1. bis 11. Ansprüche beschrieben, dadurch charakterisiert, dass mindestens einer der Balken (6) durch Verarbeitung verdichtbar ist, dieser Balken (6) in Zusammenhang mit Verarbeitungswerkzeuge arbeitend so dass der Balken und die Werkzeuge sich durch einer Verdichtungskraft relativ bewegen, um die Balken (6) mit den Werkzeugen zu verarbeiten.

13. Eine Vorrichtung wie in einem der 1. bis 12. Ansprüche beschrieben, dadurch charakterisiert, dass einer der Balken (6) der Struktur durch lokales Knicken erstellbar ist, dieses Knicken sich vorpflanzend mit aufeinanderfolgenden Falten.

14. Eine Vorrichtung wie in einem der 1. bis 13. Ansprüche beschrieben, dadurch charakterisiert, dass einer der besagten Balken aufeianderfolgend oder gleichzeitig sich erstellen.

15. Eine Vorrichtung wie in einem der 1. bis 14. Ansprüche beschrieben, dadurch charakterisiert, dass die energiedämpfende Struktur (3) aus mindestens einer Stufe (10) besteht, die besagte Stufe enthaltet mindestens zwei starre Führungselemente (7) miteinander mit verdichtbaren Balken verbunden, so dass mindestens einer der starren Führungselemente (7) während der Ausbreitung der Struktur (3) sich ungefähr gleichlaufend mit sich selbst bewegt.

## Claims

1. A device for absorbing impacts, in particular between a mobile machine (1), such as an automotive vehicle, a boat, a cart, an elevator, a train, an airplane, a travelling platform, etc, and an obstacle (2), such as a barrier, a buffer, etc, or between two mobile machines, or between two parts of a single machine which may collide during an impact sustained by a machine, this device, which is constructed to be mounted, in particular, on the obstacle (2) and/or on the mobile machine (1), comprising an energy absorbing structure (3), which is deployable by mens of actuators (4) which are set in action, after detection of an impact risk and prior to this impact, by suitable control means (5); said deployable energy absorbing structure (3) comprising at least compressible beams (6) that are connected to each other and/or to rigid guide elements (7) by joints (8,9,11) which allow rotational and/or translational movement of said beams (6) durng deployment of the structure (3), **characterized in that** said compressible beams (6) aborb the energy produced by an impact acording to a given direction (D) when the structure (3) is in the deployed position, primarily by permanent axial compression, and **in that** it is possible to lock these joints (8,9,11) in the deployed position of the structure (3) .

2. A device according to claim 1, **characterized in that** the rigid guide elements (7) take the form of elongated bodies, such as beams, which extend in a plane substantially perpendicular to the direction of impact (D).

3. A device according to claims 1 or 2, charactarized in that the joints (8) which allow for translation of the beams (6) are constructed so as to allow at least a translation of the beam (6) parallel to the longitudinal axis thereof.

4. A device according to one of claims 1 to 3, **characterized in that** the joints (9,11) which allow for rotation of the beams (6) on each other or on the rigid elements (7) are constructed so as to allow at least a rotation of said beams (6) around an axis which is fixed, or mobile in the perpendicular to the longitudinal axis of the beams (6), respectively.

5. A device according to one of claims 1 to 4, **characterized in that** at least some of the compressible beams (6) are mounted telescopically so as to increase the length of deployment of the energy absorbing structure (3), the structural characteristics of said telescopically mountable beams (6) being so chosen that, in the event of impact, said beams (6) enter into each other while being compressed.

6. A device according to one of claims 1 to 5, **characterized in that** the energy absorbing structure (3) has a three-dimensional shape allowing it to resist lateral and/or transversal and/or axial forces.

7. A device according to one of claims 1 to 6, **characterized in that** the actuators (4) are explosive thrusters wherein the piston is preferably separable from the body of the thruster when it is extended.

8. A device according to one of claims 1 to 7, **characterized in that** the actuator (4) is a thruster, the body and/or the shaft thereof being capable of further constituting a rigid guide element (7) and/or a compressible beam (6).

9. A device according to one of claims 1 to 8, **characterized in that** this comprises a plurality of actuators (4), wherein the triggering of said actuators (4) is not simultaneous.

10. A device according to one of claims 1 to 9, **characterized in that** this comprises impact absorbing and braking means for the beams at the end of the travel of the deploying structure.

11. A device according to one of claims 1 to 10, **characterized in that** at least one of the beams (6) is a so-called machining-compressible beam, wherein this beam cooperates with machining tools, and the beam (6) and the tools are caused to move relative to each other by a compressive force so as to cause longitudinal machining of the beam by th tools.

12. A device according to one of claims 1 to 11, **characterized in that** at least one of the beams (6) of the structure (3) is a beam, preferably made of composite material, which is compressed by way of breakage, damage and tearing of the walls thereof as the result of a compressive force.

13. A device according to one of claims 1 to 12, **characterized in that** at least one of the beams (6) of the structure is deformable by way of localized buckling, this buckling being propagated in the form of successive folds.

14. A device according to one of claims 1 to 13, **characterized in that** said beams are deformed successively or simultaneously.

15. A device according to one of claims 1 to 14, **characterized in that** the energy absorbing structure (3) comprises at least a stage (10), said stage comprising at least two rigid guide elements (7) connected to each other by compressible beams (6), at least one of the rigid guide elements (7) moving substantially parallel to itself during deployment of the structure (3).
